# FASCICULE DE BREVET EUROPEEN

(11) **EP 0 373 048 B1**
(45) Date de publication et mention de la délivrance du brevet: **09.09.1998**
(21) Numéro de dépôt: 89403328.1
(22) Date de dépôt: 30.11.1989
(51) Int. Cl.: B01D 35/05, B01D 29/27

(54) **Procédé et dispositif d'épuration par bac dégraisseur d'un liquide chargé d'impuretés et unité filtrante pour ce dispositif**
Verfahren und Vorrichtung zur Reinigung von mit Verunreinigungen beladenen Flüssigkeiten in einem Fettfang und Filtereinheit dafür
Process and device for the purification of liquid charged with impurities by a fat trap and filtering unit therefor

(30) Priorité: 02.12.1988 FR 8815831
(43) Date de publication de la demande: 13.06.1990
(73) Titulaire: Deshayes, Jean-Pierre Philippe, F-27290 Montfort-sur-Risle (FR)
(72) Inventeur: Deshayes, Jean-Pierre Philippe, F-27290 Montfort-sur-Risle (FR)

(56) Documents cités:
- EP-A- 0 207 693
- DE-A- 1 486 822
- FR-A- 328 717
- FR-A- 781 334
- US-A- 3 959 138

## Description

L'invention a trait à l'épuration d'un liquide chargé d'impuretés, et plus particulièrement des eaux usées domestiques.

Pour épurer de telles eaux, notamment avant épandage ou mise à l'égout, on utilise actuellement une cuve de décantation, dite bac dégraisseur, où sont séparées l'eau et les impuretés - et notamment les graisses et déchets divers de vaisselle, de lessive, etc ...- par différence de densité, les eaux usées pénétrant dans la cuve dans sa partie haute tandis que l'eau épurée est évacuée à un niveau inférieur à celui de l'entrée, après être passé par une chicane, les impuretés plus légères que l'eau, notamment les graisses, se mettant en surface tandis que les impuretés plus lourdes tombent au fond de la cuve.

Ces cuves présentent l'inconvénient de ne pas permettre d'épurer les eaux dans lesquelles sont émulsionnées les graisses, de ne pas pouvoir garder les impuretés qu'elles ont déjà retenu en cas de débit important et/ou prolongé, correspondant par exemple à la vidange d'une baignoire, ce qui conduit à une dégradation des installations en aval des cuves, et en fin de compte à la pollution de la nature ; et le nettoyage de ces cuves est une opération pénible et rebutante.

Elles sont en outre de moins en moins adaptées aux débits croissants de production des eaux usées domestiques, qui ne permettent ou ne permettront plus à la décantation de s'opérer de façon satisfaisante.

L'invention vise à pallier ces inconvénients.

Elle propose à cet effet le procédé d'épuration défini par la revendication 1.

Les impuretés sont retenues dans le sac tandis que le liquide proprement dit passe à travers ses parois, puis il est évacue à partir de la cuve.

Plus précisément, lorsque du liquide arrive dans le bac dégraisseur, le niveau monte dans la cuve et c'est le trop-plein qui excède le niveau de remplissage qui est évacué, et le sac filtrant reste immergé en majeure partie. On évite ainsi le séchage des impuretés et donc le comaltage des parois du sac, ou du moins de celles de ladite partie immergée de celui-ci, qui en résulterait.

Agissant par filtration et non par simple décantation, le procédé selon l'invention est plus efficace, et permet notamment de traiter les émulsions.

Il n'y a plus de risque de voir s'échapper en aval du bac les impuretés précédemment retenues par celui-ci, puisqu'elles sont enfermées dans le sac filtrant.

Le nettoyage est rendu plus facile et moins désagréable, il suffit en effet d'évacuer le sac lorsqu'il est chargé d'impuretés, et de le remplacer par un nouveau sac.

En outre, à encombrement égal ou même inférieur, le bac dont l'invention propose l'utilisation permet de traiter un débit beaucoup plus important, et permet donc de faire face à l'augmentation actuelle de la production des eaux usées.

Selon une autre caractéristique préférée de l'invention, on prévoit en outre un flotteur disposé à l'intérieur du sac filtrant.

Le dessus du sac se trouve ainsi sur le niveau de remplissage, c'est-à-dire que le sac reste gonflé, ce qui offre l'avantage d'éviter que deux parois du sac ne viennent en contact et restent collées l'une à l'autre du fait des impuretés.

Selon une autre caractéristique préférée de l'invention, la cuve comporte un dispositif de vidange.

On peut ainsi vider la cuve avant d'en extraire le sac lorsqu'on doit le changer, afin de rendre plus facile cette manoeuvre.

Sous un deuxième aspect, l'invention vise un dispositif d'épuration d'un liquide chargé d'impuretés qui convient comme bac dégraisseur pour la mise en oeuvre du procédé exposé ci-dessus.

EP-A-207.693 décrit un dispositif de filtration et de traitement de l'eau contaminée d'un aquarium. Ce dispositif comporte un sac filtrant formant une poche fermée ayant un col retenu par une bague sur la sortie d'un moyen d'admission formé par une unité de pompage grâce à laquelle l'eau contaminée de l'aquarium est admise en continu sous une pression prédéterminée. La matière du sac filtrant et le caractère continu et pressurisé de son utilisation créent un environnement favorable à la propagation des bactéries aérobies qui procurent une purification de l'eau contaminée en agissant sur les impuretés contaminantes au fur et à mesure qu'elles sont extraites de l'eau par le filtre. De nombreuses possibilités sont décrites pour la disposition du sac vis-à-vis de l'aquarium, qui peut simplement reposer sur la surface de l'eau, être maintenu hors de celle-ci par une tige solidaire de la sortie de l'unité de pompage, être placé dans une cuvette à fond perforé situé au-dessus de la surface de l'eau ou immergé à moitié dans celle-ci, ou encore être placé dans une cuvette latérale annexe qui déborde dans l'aquarium, en étant immergé à moitié ou complètement dans cette cuvette.

Grâce à l'effet de pressurisation l'intérieur du sac est rempli d'eau même si le sac est partiellement voire pas du tout immergé. En cas d'immersion totale du sac, l'activité aérobie est entretenue grâce à l'oxygène dissous dans l'eau de l'aquarium, mais pas nécessairement au même degré qu'en cas d'exposition à l'atmosphère.

US-A-3.959.138 décrit un filtre pour collecter les fibres textiles perdues pendant le lavage, où un petit sac à mailles souples tel que le bout fermé d'un bas nylon, est connecté à la sortie du tuyau d'évacuation de la machine à laver. La connexion se fait par une pièce circulaire sur laquelle la bouche du sac est serrée par une bague en caoutchouc, et une cage cyclindrique disposée verticalement forme avec la pièce circulaire une enceinte perforée dans laquelle se trouve le sac, qui est plus long que la cage. En fonctionnement, le liquide évacué de la machine force la partie flasque du sac à se gonfler sur une hauteur proportionnelle au débit et à la quantité de fibres précédemment collectées, ce qui évite les surpressions et permet au sac de rester en contact avec la cage sur une surface suffisante pour éviter son déchirement.

Le dispositif d'épuration selon l'invention est caractérisé dans la revendication 5, et certaines caractéristiques particulières figurent dans les revendications 6 à 14,

Sous un autre aspect, l'invention vise une unité filtrante convenant au dispositif qui vient d'être exposé, et qui comporte les caractéristiques définies dans les revendications 15 à 18.

Selon une autre caractéristique préférée de cette unité, le sac est réalisé en géotextile.

Ces matières, bien qu'elles ne soient connues que pour réaliser, notamment dans la construction des routes, une interface entre un sol préexistant et une matière de terrassement rapportée sur celui-ci, c'est-à-dire pour une application très éloignée de l'invention ; conviennent cependant particulièrement bien pour réaliser le sac filtrant, car elles possèdent à la fois la perméabilité et la résistance au déchirement voulue tout en étant imputrescibles.

Ces matières offrent en outre l'avantage d'être incinérables, et donc de permettre une élimination relativement simple des sacs filtrants usagés.

Les caractéristiques, particularités et avantages de l'invention apparaîtront au cours de la description d'un exemple de réalisation, donné ci-après à titre non limitatif, en référence aux dessins annexés.

Sur ceux-ci :
- la figure 1 est une élévation longitudinale d'un dispositif selon l'invention, suivant la coupe indiquée en I-I sur la figure 2 ;
- la figure 2 est une vue de dessus de ce dispositif, couvercle enlevé ;
- la figure 3 en est une élévation latérale suivant la coupe indiquée en III-III sur la figure 1 ;
- la figure 4 est une élévation longitudinale du sac filtrant que comporte le dispositif ; et
- la figure 5 est une élévation latérale de l'embout dont est muni le sac, vu comme indiqué en V sur la figure 4.

Conformément à l'invention qui vient d'être exposée et à ses caractéristiques préférées, le dispositif d'épuration illustré comporte une cuve 1 dans laquelle est disposé un sac filtrant amovible 2 à l'intérieur duquel se trouve un flotteur 3, et la cuve 1 comporte une évacuation du liquide épuré situé au niveau de remplissage 4, et un dispositif de vidange.

Le dispositif est représenté au repos, où le niveau à l'intérieur de la cuve correspond au niveau de remplissage 4, le sac est gonflé et se trouve immergé en majeure partie dans le liquide, il n'y a qu'une portion de sa partie supérieure qui se trouve émergée, d'une part à cause du flotteur 3, et d'autre part à cause de la fixation du sac, ou plutôt de son embout, sur la cuve, qui se fait ici en partie haute de celle-ci.

On notera que sans l'immersion (qui évite également le séchage des impuretés) et sans le flotteur, la partie supérieure du sac aurait tendance à rejoindre sa partie basse, le sac ne resterait donc pas gonflé, et on risquerait d'avoir entre les parois couvertes d'impuretés venant en contact, un collage qui ne permettrait pas un fonctionnement correct du dispositif.

La cuve comporte en sa partie basse une bouche 5 de sortie du liquide épuré, un orifice de vidange obturable 6 relié à la bouche 5, ainsi qu'un déchargeoir 7 entre le niveau de remplissage 4 et la bouche 5.

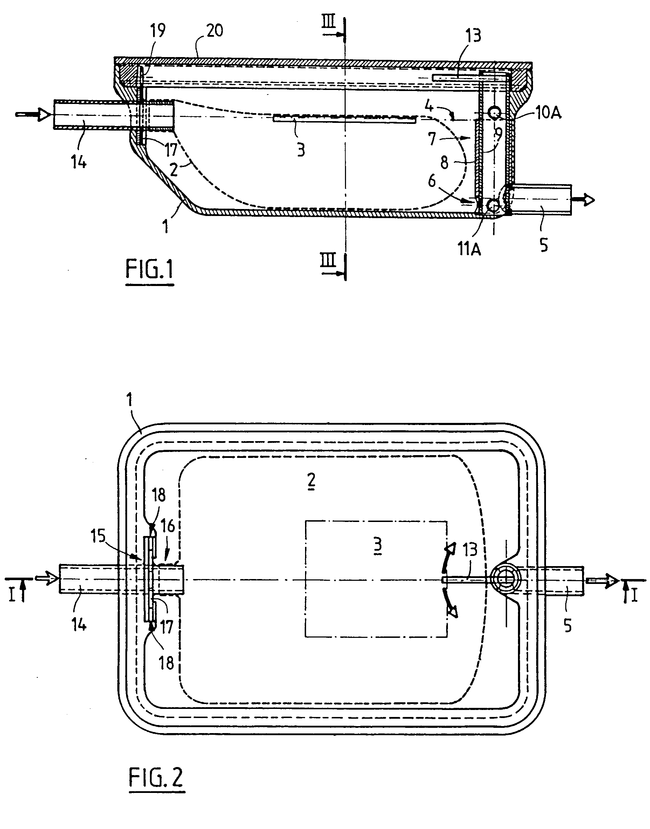

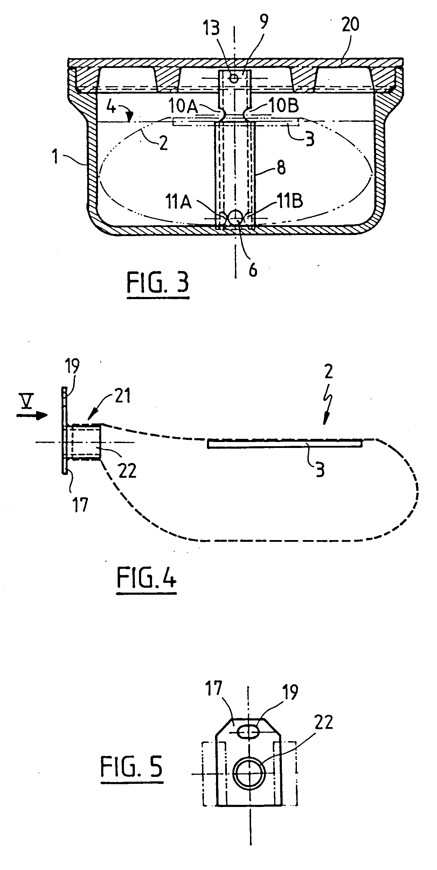

Le déchargeoir et l'orifice de vidange sont réalisés par un premier tube 8 s'étendant du fond de la cuve jusqu'au niveau de remplissage, muni de l'orifice 6 en partie basse ; et par un deuxième tube 9 inséré tournant dans le premier tube, muni audit niveau de remplissage de deux ouvertures 10A et 10B diamètralement opposées, admettant une position de service (illustrée sur les figures 1 à 3) où il obture l'orifice 6 , et une position de vidange -obtenue par rotation d'un quart de tour dans un sens ou dans l'autre à partir de la position de service-où son intérieur est en communication avec l'intérieur de la cuve à travers une ouverture 11A ou 11B qu'il comporte en partie basse et l'orifice 6, l'intérieur du tube 9 communiquant avec la bouche de sortie 5 en position de vidange par l'ouverture 11A ou 11B, l'une de celle-ci étant adjacente à l'orifice 6 et l'autre en regard de la bouche 5. En positionn de service, c'est une ouverture située entre les ouvertures 11A et 11B qui permet à l'intérieur du tube 9 de communiquer avec la bouche de sortie.

En variante, les ouvertures 11A et 11B et l'ouverture située entre celles-ci sont remplacées par un évidement complet équivalent du tube 9.

Le tube 8 s'étend ici au maximum, c'est-à-dire jusqu'au niveau 4, afin de procurer au tube 9 une surface de guidage la plus grande possible, mais il est possible de réduire la longueur du tube 8 pour des raisons d'économie.

On observera que si le liquide pénétrait directement dans le déversoir suivant sa direction générale d'écoulement dans la cuve, le courant correspondant entraînerait le sac qui se déformerait et aurait tendance à vouloir pénétrer dans le déversoir, ce qui empêcherait le fonctionnement correct du dispositif.

Pour éviter ce problème, les deux ouvertures 10A et 10B du tube 9 sont disposées en position de service coaxialement à une direction transversale à la direction générale d'écoulement du liquide : on obtient ainsi au voisinage du déversoir un écoulement qui quitte la la direction générale et se divise en deux courants transversaux dont il résulte un maintien en place du sac, et même un effet de gonflement supplémentaire.

Pour permettre de commander la vidange à partir du dessus de la cuve, le deuxième tube 9 se prolonge au-delà du niveau de remplissage, et comporte en partie haute une barre de manoeuvre 13 pour le faire passer de la position de service à la position de vidange ou vice-versa.

Pour rendre commode le branchement du sac sur l'arrivée du liquide à épurer, et aussi pour fixer le sac à la cuve, celle-ci comporte une bouche d'admission 14 débouchant dans son intérieur par un embout 15, et le sac 2 comporte un embout d'admission 16, les embouts 15 et 16 formant un raccord au moyen duquel la bouche d'admission 14 est raccordée à l'intérieur du sac filtrant.

Dans l'exemple illustré, le raccord est réalisé de façon particulièrement simple, par une plaque 17 qui termine l'embout 16 du sac et une glissière 18 sur l'embout 15 de la cuve, dans laquelle la plaque s'insère.

Le bouche d'admission 14 est située en partie haute de la cuve, la plaque 17 s'insère verticalement dans l'embout 15 et elle comporte une poignée 19 en partie haute, ce qui permet la mise en place et le retrait du sac de façon simple et commode, en saisissant un matériau qui est de plus propre et sec, la poignée n'ayant jamais été immergée.

Le dispositif d'épuration illustré comporte un couvercle amovible 20 qui lui permet d'être enterré, et ses bouches d'admission et de sortie 14 et 5 ont un décalage en hauteur similaire à celui des bacs dégraisseurs classiques (environ 15cm), tandis que l'encombrement de la cuve s'inscrit à l'intérieur de celui de ces bacs (généralement un parallélépipède ayant une base de 70 par 55 cm et une hauteur de 50 cm). On peut donc aisément remplacer dans une installation existante un bac dégraisseur classique par le dispositif illustré sur les figures.

La cuve est avantageusement réalisée en résine polyester ou en plastique moulé, ces matériaux présentant l'avantage d'être faciles à mettre en oeuvre, légers et résistants.

Le sac filtrant, comme indiqué précédemment, est avantageusement réalisé en Septofeutre Bidim, notamment à partir d'une feuille taillée qui est ensuite cousue de façon à former une poche fermée avec un col 21, dans lequel on colle le tube 22 qui forme avec la plaque 17 l'embout 16.

Afin de lui permettre d'être disposé au niveau du sol dans un endroit visible, le dessus du couvercle peut être garni par de l'herbe synthétique ou du gravier.

La cuve est mise en place et on raccorde la bouche d'admission 14 à la source d'eaux usées et la bouche de sortie 5 au système d'épandage ; on y installe le sac, on ferme le couvercle 20 ; et lorsqu'arrive le liquide à épurer, les impuretés sont retenues dans le sac tandis que le liquide proprement dit passe au travers de ses parois, le niveau monte dans la cuve et le trop-plein par rapport au niveau de remplissage s'écoule par le déversoir 7 et quitte le dispositif par la bouche de sortie 5.

Au bout d'un certain temps, lorsqu'on constate que le sac est plein ou comalté (la vitesse d'écoulement au travers du dispositif s'étant réduite), on change le sac en enlevant le couvercle, en manoeuvrant la barre 13 pour mettre le tube 9 en position de vidange, et lorsque la cuve est vidée, on saisit le sac par la poignée 19, on l'extrait de la cuve, on le remplace par un nouveau sac et on fait passer le déchargeoir en position de service, on referme le couvercle, et le dispositif est à nouveau prêt à fonctionner.

Bien entendu, l'invention ne se limite pas au mode de réalisation décrit et représenté sur les figures, mais englobe au contraire toutes les variantes que l'homme du métier pourra déterminer.

## Revendications

1. Procédé d'épuration par bac dégraisseur, avant épandage ou mise à l'égoût, d'un ensemble d'eaux usées produit à débits et durées variables par différentes activités domestiques dont au moins une est susceptible de charger l'eau en graisses, caractérisé en ce que les eaux sont admises dans un bac dégraisseur comportant dans une cuve (1) un sac filtrant amovible (2) formant une poche fermée ayant un col (21) rapporté sur un conduit d'admission (14,16) dans la cuve dudit ensemble d'eaux usées, ledit sac et ledit conduit étant uniques et disposés horizontalement, ladite cuve comportant une bouche de sortie (5) avec une évacuation du liquide épuré situé à un niveau (4) dit de remplissage endessous duquel la cuve présente un volume adapté à contenir le sac (2) lorsqu'il est gonflé, afin qu'en service il reste immergé au moins en majeure partie.

2. Procédé selon la revendication 1, caractérisé en ce que ledit conduit est tubulaire.

3. Procédé selon l'une quelconque des revendications 1 ou 2, caractérisé en ce qu'on prévoit en outre un flotteur (3) disposé à l'intérieur du sac filtrant (2).

4. Procédé selon l'une quelconque des revendications 2 ou 3, caractérisé en ce que la cuve comporte un dispositif de vidange.

5. Dispositif d'épuration d'un liquide chargé d'impuretés, caractérisé en ce qu'il présente les caractéristiques du bac dégraisseur défini dans l'une quelconque des revendications 1 à 4, et en ce que ledit conduit d'admission dans la cuve est formé par :
- une bouche d'admission (14) faisant partie de la cuve (1), comportant un embout extérieur prévu pour être raccordé à une source de liquide chargé d'impuretés, et un embout intérieur (15) ; et
- un embout d'admission (16) sur lequel est définitivement rapporté le col (21) du sac (2), adapté à coopérer de façon amovible avec ledit embout intérieur (15) de la bouche d'admission (14) pour former un raccord au moyen duquel la bouche d'admission de la cuve est raccordée à l'intérieur du sac filtrant.

6. Dispositif selon la revendication 5, caractérisé en ce que ledit embout d'admission (16) sur lequel est définitivement rapporté le col (21) du sac (2), comporte un tube (22) dans ledit col.

7. Dispositif selon l'une quelconque des revendications 5 ou 6, caractérisé en ce que ledit embout d'admission (16) du sac se termine par une plaque (17), et en ce que ledit embout intérieur (15) de la cuve comporte une glissière (18) dans laquelle ladite plaque est destinée à être insérée.

8. Dispositif selon la revendication 7, caractérisé en ce que la bouche d'admission (14) de la cuve est située en partie haute, la plaque (17) de l'embout (16) du sac s'insère verticalement dans l'embout (15) de la cuve, et elle comporte une poignée (19) en partie haute.

9. Dispositif selon l'une quelconque des revendications 5 à 8, caractérisé en ce que la cuve comporte en sa partie basse une bouche (5) de sortie de liquide et un orifice (6) de vidange obturable relié à la bouche de sortie, ainsi qu'un déchargeoir (7) entre ledit niveau de remplissage (4) et la bouche de sortie (5).

10. Dispositif selon la revendication 9, caractérisé en ce que ledit déchargeoir (7) comporte au niveau de remplissage deux ouvertures (10A, 10B) coaxiales à une direction transversale à la direction générale d'écoulement du liquide dans la cuve.

11. Dispositif selon l'une quelconque des revendications 9 ou 10, caractérisé en ce que lesdits déchargeoir et orifice de vidange obturable sont réalisés par un premier tube (8) s'étendant au fond de la cuve jusqu'à au plus ledit niveau de remplissage (4), muni d'un orifice (6) en partie basse ; et par un deuxième tube (9) inséré tournant dans le premier tube (8), muni d'au moins une ouverture (10A, 10B) audit niveau de remplissage, admettant une position de service où il obture ledit orifice (6) du premier tube, et une position de vidange où son intérieur est en communication avec l'intérieur de la cuve à travers une ouverture (11A, 11B) qu'il comporte en partie basse et ledit orifice (6) du premier tube, l'intérieur du deuxième tube communiquant avec la bouche de sortie dans la position de service et dans la position de vidange.

12. Dispositif selon la revendication 11, caractérisé en ce que ledit deuxième tube (9) se prolonge au-delà du niveau de remplissage (4), et comporte en partie haute une barre (13) de manoeuvre pour le faire passer de la position de service à la position de vidange ou vice-versa.

13. Dispositif selon l'une quelconque des revendications 5 à 12, caractérisé en ce que son décalage en hauteur entre les bouches d'admission et de sortie (14, 5) est similaire à celui d'un bac dégraisseur classique, et en ce que son encombrement s'inscrit à l'intérieur de celui d'un tel bac.

14. Dispositif selon l'une quelconque des revendications 5 à 13, caractérisé en ce que le sac filtrant (2) est réalise en géotextile.

15. Unité filtrante pour dispositif selon l'une quelconque des revendications 5 à 14, caractérisée en ce qu'elle comporte :
- un sac filtrant (2) formant une poche fermée ayant un col (21) ; et
- un embout d'admission (16), sur lequel est définitivement rapporté le col (21) du sac (2), adapté à coopérer de façon amovible avec un embout intérieur (15) d'une bouche d'admission (14) faisant partie de la cuve (1) dudit dispositif, pour former un raccord au moyen duquel la bouche (14), qui comporte également un embout extérieur, est reliée à l'intérieur du sac filtrant.

16. Unité selon la revendication 15, caractérisée en ce que ledit embout d'admission (16) sur lequel est définitivement rapporté le col (21) du sac (2) comporte un tube (22) dans ledit col.

17. Unité selon l'une quelconque des revendications 15 ou 16, caractérisée en ce que ledit embout d'admission (16) du sac se termine par une plaque (17) destinée à être insérée dans une glissière (18) que comporte ledit embout intérieur (15).

18. Unité selon la revendication 17, caractérisée en ce que ladite plaque (17) comporte une poignée (19) en partie haute, ladite plaque étant prévue pour s'insérer verticalement dans l'embout intérieur (15) de la cuve.

19. Unité selon l'une quelconque des revendications 15 à 18, caractérisée en ce que le sac filtrant (2) est réalisé en géotextile.

## Claims

1. Procedure of purification by a cleaning, fats separating, tank, before sewage farm or main server, of various waste waters produced with varying delivery flow and duration by different household activities, one of which at least being likely of lading the water with fats, characterized by the said waters being admitted into a cleaning, fats separating, tank, comprising, in a vat (1), an interchangeable filtering bag (2) forming a closed pocket fitted with a neck (21) feed on an admission pipe (14,16) into the vat of the aforementioned waste waters, the aforementioned bag and the aforementioned pipe, being found only once in this device, disposed horizontally, the aforementioned vat comprising an outlet hole (5) with an emptying of the cleaned liquid located at a level (4) called filling up level under which the vat offers a space fitted to contain the bag (2) when it is inflated, so that, while in use, it stays immersed at least for the most part.

2. Procedure according to claim 1, characterized by its aforementioned pipe being tubular.

3. Procedure according to any claim 1 or 2, characterized by a float (3) located in the inside of the filtering bag (2) being furthermore provided for.

4. Procedure according to any claim 2 or 3, characterized by the vat comprising an emptying device.

5. Purification device of a liquid laden with impurities, characterized by its presenting the characteristics of the cleaning, fats separating, tank clearly defined by any claim 1 to 4, and by its aforementioned admission pipe into the vat being made of:
- an admission entrance (14), being part of the vat (1), comprising an external pipe connection provided for to be connected to a source of liquid laden wih impurities, and an internal pipe connection (15); and
- an admission pipe connection (16) with which the neck (21) of the bag (2) is permanently fitted, adapted to cooperate in an interchangeable way with the aforementioned internal pipe connection (15) of the admission entrance (14) to create a join by means of which the admission entrance of the vat is connected to the inside of the filtering bag.

6. Device according to claim 5, characterized by the aforementioned admission pipe connection (16) with which the neck (21) of the bag (2) is permanently fitted, comprising a tube (22) in the aforementioned neck.

7. Device according to any claim 5 or 6, characterized by the aforementioned admission pipe connection (16) of the bag ending with a plate (17), and by the aforementioned internal pipe connection (15) of the vat comprising a slide bar (18) into which the plate is meant to be fitted.

8. Device according to claim 7, characterized by the aforementioned admission entrance (14) of the vat being located in its upper part, the plate (17) of the pipe connection (16) of the bag fitting vertically into the pipe connection (15) of the vat, and its comprising a handle (19) in the upper part.

9. Device according to any claim 5 to 8, characterized by the vat comprising in its lower part a liquid outlet hole (5) and a closing emptying orifice (6) connected to the outlet hole, as well as an overflow pipe (7) between the aforementioned filling up level (4) and the outlet hole (5).

10. Device according to claim 9, characterized by the aforementioned overflow pipe (7) comprising at the filling up level two diametrically opposite openings (10A, 10B), on a perpendicular axis to the main axis of liquid outflow into the vat, formed by tube (9).

11. Device according to any claim 9 or 10, characterized by the aforementioned overflow pipe and closing emptying orifice heing implemented by a first tube (8) rising from the bottom of the vat at the upmost up to the filling up level (4), supplied with an orifice (6) in its lower part; and by a second tube (9) fitted into and revolving in the first tube (8), supplied with at least one opening (10A, 10B) at the aforementioned filling up level, allowing a functioning position in which it obturates the aforementioned orifice (6) of the first tube, and an emptying position in which its inside is in communication with the inside of the vat through an opening (11A, 11B) which it comprises in its lower part and the aforementioned orifice (6) of the first tube (8), the inside of the second tube communicating with the outlet hole in functioning position as well as in emptying position.

12. Device according to claim 11, characterized by the aforementioned tube (9) being extended above the filling up level (4), and comprising in its upper part an operation bar (13) to manoeuvre it from the functioning position to the emptying position and vice versa.

13. Device according to any claim 5 to 12, characterized by its difference in height between the admission entrance and the outlet hole (14, 5) being similar to the one of a standard cleaning tank, and by its overall dimensions allowing it to fit into the occupying space of such a tank.

14. Device according to any claim 5 to 13, characterized by the filtering bag (2) being made of geotextile (non woven synthetic manufactured material).

15. Filtering unit for device according to any claim 5 to 14, characterized by its comprising:
- a filtering bag (2) forming a closed pocket fitted with a neck (21); and
- an admission pipe connection (16) with which the neck (21) of the bag (2) is permanently fitted, adapted to cooperate in an interchangeable way with the aforementioned internal pipe connection (15) of the admission entrance (14), being part of the vat (1) of the aforementioned device, to create a join by means of which the entrance (14), which also comprises an external pipe connection, is connected to the inside of the filtering bag.

16. Unit according to claim 15, characterized by the aforementioned admission pipe connection (16), with which the neck (21) of the bag (2) is permanently fitted, comprising a tube (22) in the aforementioned neck.

17. Unit according to any claim 15 to 16, characterized by the aforementioned admission pipe connection (16) of the bag ending with a plate (17) meant to be fitted into a sliding bar (18) comprised by the aforementioned internal pipe connection (15).

18. Unit according to claim 17, characterized by the aforementioned plate (17) comprising a handle (19) in its upper part, the aforementioned plate being meant to fit vertically into the internal pipe connection (15) of the vat.

19. Unit according to any claim 15 to 18, characterized by the filtering bag (2) being made of geotextile (synthesis fabric).

## Patentansprüche

1. Reinigungsverfahren durch Reinigungs-, Entfettungs- Trog, bevor Berieseln oder Abflusskanalisierung, des gesamten Schmutzwassers, das mit wechselnden Durchfluss und Dauer durch verschiedenen Haushaltstaetigkeiten erzeugt wurde, von denen mindestens eine faehig ist, das Wasser mit Fettwaren zu beladen, bekennzeichnet dadurch, dass das Wasser in einen Reinigungs-, Entfettnngs-Trog aufgenommen wird, welcher in einer Wanne (1) einen abnehmbaren Filtrierbeutel (2) enthaelt, welcher eine geschlossene Tasche mit Hals (21) bildet, der auf eine Aufnahmeleitung (14, 16) in die Wanne des besagten gesammten Schmutzwassers angesetzt wird, der besagte Beutel und die besagte Leitung, einzig in dieser Vorrichtung, waagerecht angelegt, die besagte Wanne eine Ausgangsoeffnung (5) mit Entleerung der gereinigten Fluessigkeit enthaltend, befindlich auf einem Stand (4), Ausfuellungsstand genannt, unter dessen die Wanne einen zum Enthalten des Beutels (2), wenn dieser aufgeblasen ist, angepassten Rauminhalt vorweist, damit dieser, wenn in Taetigkeit, zum groessten Teil versenkt bleibt.

2. Verfahren gemaess der Forderung 1, bekennzeichnet dadurch, dass die besagte Leitung rohrfoermig ist

3. Verfahren gemaess irgendeiner der Forderungen 1 oder 2, bekennzeichnet dadurch, dass ausserdem noch ein innerhalb des Filtrierbeutels (2) sich befindender Schwimmer (3) vorgesehen wird.

4. Verfahren gemaess irgendeiner der Forderungen 2 oder 3, bekennzeichnet dadurch, dass die Wanne eine Ausleerungsvorrichtung enthaelt.

5. Reinigungsvorrichtung einer mit Schmutz beladenen Fluessigkeit, bekennzeichnet dadurch, dass sie die Eigenschaften des in irgendeiner der Forderungen 1 bis 4 naeher geschilderten Reinigungs-, Entfettnngs- Troges vorweist, und dadurch, dass die besagte Aufnahmeleitung in die Wanne aus folgendem besteht:
- einer Aufnahmeoeffnung (14), Bestandteil der Wanne (1), die eine aeusserliche Anschlussroehre enthaelt, die vorgesehen ist, um an eine mit Schmutz beladenen Fluessigkeitsquelle angeschlossen zu werden, und einer inneren Anschlussroehre (15); sowie
- einer Aufnahmeanschlussroehre (16) auf welche der Hals (21) des Beutels (2) endgueltig angesetzt wird, angepasst, um auswechselnderweise mit der inneren Anschlussroehre (15) der Aufnahmeoeffnung (14) mitzuwirken, um einen Anschluss, mittels dessen die Aufnahmeoeffung der Wanne ins Innere des Filtrierbeutels angeschlossen wird, zu bilden.

6. Vorrichtung gemaess der Forderung 5, bekennzeichnet dadurch, dass die besagte Aufnahmeanchlussroehre (16), auf welche der Hab (21) des Beutels (2) endgueltig angesetzt wird, ein Rohr (22) in dem besagten Hals enthaelt.

7. Vorrichtung gemaess irgendeiner der Forderungen 5 oder 6, bakennzeichnet dadurch, dass die besagte Aufnahmeanschlussroehre (16) des Beutels mit einer Platte (17) beendigt wird, und dadurch, dass die besagte Anschlussroehre (15) der Wanne eine Gleitschiene (18) enthaelt, auf welche vorgesehen ist, die besagte Platte einzuschieben.

8. Vorrichtung gemaess der Forderung 7, bekennzeichnet dadurch, dass die Aufnahmeoeffnung (14) der Wanne sich im oberen Teil befindet, die Platte (17) der Anschlussroehre (16) des Beutels wird senkrecht in die Anschlussroehre (15) der Wanne eingeschoben, und sie einen Griff (19) im oberen Teil enthaelt.

9. Vorrichtung gemaess irgendeiner der Forderungen 5 bis 8, bekennzeichnet dadurch, dass die Wanne in ihrem unteren Teil eine Fluessigkeitsausgangsoeffnung (5) und ein, mit der Ausgangsoeffnung verbunden, verschliessbares Ausleerungsloch (6), sowie ein Abflussrohr (7) zwishen dem besagten Ausfuellungsstand (4) und der Ansgangsoeffnung (3) enthaelt.

10. Vorrichtung gemaess der Forderung 9, bekennzeichnet dadurch, dass das besagte Abflussrohr (7) auf dem Ausfuellungsstand zwei gleichachsigen diametral entgegengesetzten Oeffnungen (10A, 10B), auf einer senkrechten Achse zur allgemeinenen Richtung des Fluessigkeitsabflusses in die Wanne, enthaelt.

11. Vorrichtung gemaess irgendeiner der Forderungen 9 oder' 10, bekennzeichnet dadurch, dass die besagten Abflussrohr und verschliessbares Ausleerungsloch, durch eine erste Roehre (8), die sich vom Boden der Wanne bis hoechstens zum sogenannten Ausfuellungsstand (4) erhebt, und die mit einem Loch (6) im unteren Teil ausgeruestet ist (verwirklicht werden); und durch eine zweite Roehre (9), die, in der ersten Roehre eingesetzt, sich in dieser ersten Roehre (8) dreht, und die mindestens mit einer Oeffnung (10A, 10B) auf den sogenannten Ausfuellungsstand versehen ist, die eine Betriebslage gestattet, in der sie das besagte Loch (6) der ersten Roehre verstopft, und eine Ausleerungslage gestattet, in der ihr Inneres in Verbingung mit dem Inneren der Wanne durch eine in ihrem unteren Teil befindlichen Oeffnung (11A, 11B) und das besagte Loch (6) der ersten Roehre, das Innere der zweiten Roehre mit der Ausgangsoeffnung, in Betriebslage sowie in Ausleerungslage, in Verbindung stehend, verwirklicht werden.

12. Vorrichtung gemaess der Forderung 11, bekennzeichnet dadurch, dass die zweite Roehre (9) sich ueber den Ausfuellungsstand (4) hinausverlaengert, und im oberen Teil eine Bedienungsstange (13) enthaelt, um sie von der Betriebslage zur Ausleerungslage und umgekehrt gelangen zu lassen.

13. Vorrichtung gemaess Irgendeiner der Forderungen 5 bis 12, bekennzeichnet dadurch, dass ihre Hoehenverschiebung zwischen Aufnahme- und Ausgangsoeffnungen (14, 5) gleichartig mit der eines ueblichen Entfettungstroges ist, und dadurch, dass ihr Platzbedarf ihr ermoeglicht, sich in einen solchen anzupassen.

14. Vorrichtung gemaess irgendeiner der Forderungen 5 bis 13, bekennzeichnet dadurch, dass der Filtrierbeutel aus Geotextil (Synthese-Stoff) hergestellt wird.

15. Filtriereinheit fuer Vorrichtung gemaess irgendeiner der Forderungen 5 bis 14, bekennzeichnet dadurch, dass sie aus folgendem besteht:
- einem Filtrierbeutel (2), der eine geschlossene Tasche mit einem Hals (21) bildet, und
- einer Aufnahmeanschlussroehre (16), auf welche der Hals (21) - gewoehnlich - endgueltig angesetzt wird, dazu angepasst, um mit einer inneren Anschlussroehre (15) einer Aufnahmeoeffnung (14), Bestandteil der Wanne (1) der Vorrichtung, im Gebrauch in auswechselbarer Weise mitzuwirken, um einen Anschluss herzustellen, mit welchem die Oeffnung (14), die selbst eine auessere Anschlussroehre enthaelt, an das Innere des Beutels angeschlossen wird.

16. Einheit gemaess der Forderung 15, bekennzeichnet dadurch, dass die besagte Aufnahmeanschlussroehre (16), auf welche der Hals (21) des Beutels (2) endgueltig angesetzt wird, eine Roehre (22) im besagten Hals enthaelt.

17. Einheit gemaess irgendeiner der Forderungen 15 oder 16, bekennzeichnet dadurch, dass die besagte Aufnahmeanschlussroehre (16) des Beutels mit einer Platte (17) beendet wird, die dazu bestimmt ist, in eine Schiene (18), welche von der besagten inneren Anschlussroehre enthalten wird, eingeschoben zu werden.

18. Einheit gemaess der Forderung 17, bekennzeichnet dadurch, dass die besagte Platte (17) einen Griff (19) im oberen Teil enthaelt, die besagte Platte vorgesehen, um senkrecht in die innere Anschlussroehre (15) der Wanne eingeschoben zu werden.

19. Einheit gemaess irgendeiner der Forderungen 15 bis 18, bekennzeichnet dadurch, dass der Filtrierbeutel (2) aus Geotextil, synthetisch hergestelltem Stoff, hergestellt wird.
